# EUROPEAN PATENT APPLICATION

(11) **EP 1 967 807 A1**
(43) Date of publication of application: **10.09.2008**
(21) Application number: 08101993.7
(22) Date of filing: 26.02.2008
(51) Int. Cl.: F28D 7/16

(54) **An arrangement in a heat exchanger**

(30) Priority: 07.03.2007 FI 20070196
(71) Applicant: ABB Oy, 00380 Helsinki (FI)
(72) Inventor: Ikonen, Janne, 02940 Espoo (FI); Tyllinen, Yrjö, 12400 Tervakoski (FI)

(57) **Abstract**

In the arrangement in a heat exchanger in accordance with the invention, the heat exchanger comprises a shell and tubes. The tubes are placed inside the shell. The first medium entering the heat exchanger can be conducted into the tubes and the second medium between the inner shell surface and outer tube surface, and the first medium from the heat exchanger can be conducted out from the tubes and the second medium out from between the inner shell surface and outer tube surface. The heat exchanger comprises at least two tube rows placed in succession in the direction of the second medium's flow. The first tube row comprises at least two tubes, the first distance being between the two parallel tubes, the second distance being between the first parallel tube in the first row and a tube in the second row, and the third distance is between the second parallel tube in the first row and the tube in the second row. The first, second and third distances form a triangle, each angle of which is smaller than 90° and the second distance is a different length from the third distance.

## Description

The object of the invention is an arrangement and a method in a heat exchanger according to the preamble of Claims 1 and 8.

### Prior art

Tube and shell heat exchanger is the most widely used heat exchanger type in the process industry. The cost/power ratio of the tube and shell heat exchanger is relatively low and its benefits include reliability, durability and versatile structures.

Tube heat exchangers are generally built from round tubes where one medium flows inside the tube and the other medium outside the tube. Because of its structure, tube heat exchangers are suitable for purposes requiring high pressures and temperatures. The most common tube heat exchanger types include double tube heat exchangers and tube and shell heat exchangers.

Tube and shell heat exchangers generally consist of a tube bank placed inside a cylindrical shell. The tubes are connected to a tube plate at their ends. The plate separates medium flows in the tube and shell sides from each other. Spacing plates are attached within the shell to guide the flow on the shell side, increase flow speed and support the tube bank.

Under proper conditions, the flow on the shell side induces vibration to the heat exchanger's tubing. The vibration comprises the motion of the physical system around a certain position of equilibrium. There are different excitation mechanisms for the tube vibration, such as fluid elastic instability, excitation caused by a swinging vortex, acoustic resonance and vibration excitation caused by turbulence. Vibration reduces the life of heat exchangers and causes noise and energy losses.

A known solution for controlling vibration in a heat exchanger is to support the entire heat exchanger or its tubes as well as possible without fixing the tubes to the support plates. The support can be carried out by placing spacing plates at a short distance from each other. The disadvantage of these solutions is the increase in the heat exchanger's manufacturing expenses due to increased work stages and material costs. The second solution to reduce vibrations is to maintain the flow speeds inside the heat exchanger as low as possible, particularly the flow speed between tubes on the shell side. In this case, the size of the heat exchanger increases and greater material costs increase the manufacturing expenses.

Tube and shell heat exchangers are often used for cooling rotating electrical machines. Air heated in the electrical machine is cooled down in the heat exchanger using outdoor air. Occasionally, the outdoor air used can be very dirty. In this case, the process benefits from the fact that tube and shell heat exchangers are easy to clean. Heat exchangers used to cool down electrical machines are to be small in size and have great heat exchange power.

When a rotating electrical machine is control-operated, the air flow required for cooling varies according to the air flow control. The regular range is 0-130% of the designed air flow. In this case, the flow speed of the air from the electrical machine to be cooled in the heat exchanger changes correspondingly in the heat exchanger. If the heat exchanger is dimensioned so that the flow speed is low even for greater air flows, the heat exchanger will be large and heavy.

### Description of invention

The purpose of the presented invention is to achieve an arrangement in a heat exchanger. In order to achieve this, the invention is characterized by the features specified in the characteristics section of Claims 1 and 8. Some other preferred embodiments of the invention have the characteristics specified in the dependent claims.

In the arrangement in a heat exchanger in accordance with the invention, the heat exchanger comprising a shell and tubes. The tubes are placed inside the shell. The first medium to the heat exchanger is conductable into the tubes and the second medium between the inner shell surface and outer tube surface, and the first medium from the heat exchanger is conductable out from the tubes and the second medium out from between the inner shell surface and outer tube surface. The heat exchanger comprises at least two tube rows placed in succession in the direction of the second medium's flow. The first tube row contains at least two tubes, the first distance being between the two parallel tubes, the second distance being between the first parallel tube in the first row and a tube in the second row, and the third distance is between the second parallel tube in the first row and a tube in the second row. The first, second and third distances form a triangle, each angle being smaller than 90°. The second distance differs in length from the third distance.

In a method in accordance with the invention for increasing a flow speed launching a fluid elastic instability of tubing in a heat exchanger the heat exchanger comprises a shell and tubes. The tubes are placed inside the shell. The first medium is conducted into the tubes and the second medium between the inner surface of the shell and the outer surface of the tubes, and the first medium is conducted out from the tubes and the second medium out from between the inner surface of the shell and the outer surface of the tubes. At least part of the tube division is arranged asymmetrically.

An embodiment of the invention is in tube and shell heat exchangers where the tubes located inside the heat exchanger have an essentially smooth outer surface. A tube with a smooth outer surface does not characteristically interrupt the flow, and the embodiment in accordance with the invention interrupts the flow preventing it from synchronizing on the shell side.

Another embodiment of the invention is in tube and shell exchangers where gas, such as air, flows on the heat exchanger's shell side and gas, again such as air, flows also on the heat exchanger's tube side. Gas flowing on the tube side does not dampen vibration induced by the flowing gas mass on the shell side as would a liquid flow with a higher density which slightly dampens vibration.

An embodiment of the invention is in tube and shell heat exchangers used for cooling electrical machines. The cooling agent of an electrical machine, usually air or gas, is conducted from the electrical machine to the heat exchanger's shell side where it flows between the inner shell surface and the outer tube surface. The medium flow receiving heat from the electrical machine's cooling medium flows inside the tubes. With an embodiment in accordance with the invention, the flow speeds on the heat exchanger's shell side can be increased and the size of the heat exchanger can be reduced.

An embodiment of the invention is in tube and shell heat exchangers used for cooling control-operated electrical machines. The rotation speed of a control-operated electrical machine is changeable, in which case the required volume flow rate of the cooling agent changes along with the control. However, nominal torque may be required from the electrical machine using a low rotation speed, in which case the volume flow rate of the cooling agent is connected to follow the torque. The regular range for the cooling air flow of a control-operated electrical machine is 0-130% of the designed air flow.

An embodiment of the invention is a cross flow heat exchanger where the flow direction of the first medium and that of the second medium are essentially perpendicular.

In order to maintain heat exchange at a good level, the tube division, i.e. the distance between tubes, is to be kept low in heat exchangers. In this case, it is preferable that the tube division of asymmetrical tube rows is not too sparse. According to the preferred embodiment, the maximum distance between the tubes in the second row is double the distance between the tubes in the first row.

According to an embodiment, the first distance between the two parallel tubes in the first row is different from the second distance between the first parallel tube in the first row and a tube in the second row.

With the arrangement in a heat exchanger in accordance with the invention, the medium flowing on the shell side is provided with a different parallel flow path elsewhere and not only on the sides of the flow space. In this case, the parallel flow paths are not only each other's mirror images. Because of the different flow paths, each maximum flow speed of the medium between the tubes on the shell side is located in a different tubing section.

An embodiment in accordance with the invention reduces vibration in tube and shell heat exchangers. The arrangement and the method increases flow speed on the shell side, with which the tubing's fluid elastic instability launches or appears. As a result, the life of the heat exchanger increases, noise level decreases and energy loss reduces.

An asymmetrical tube division in accordance with the invention can be carried out so that successive (or every 3rd, 4th, etc.) tube rows in a tube and shell heat exchanger have different divisions or part of each tube row has a different division.

In a tube division arranged asymmetrically, the parallel flow cross sections between two tube rows placed one after another in the direction of the flow are different sizes. The flow cross sections are formed between three closest tubes. This disturbs the synchronization of the medium flow reducing vibration.

With the arrangement in accordance with the invention, the heat exchanger's manufacturing expenses do not increase much. The number of work stages or material costs are not increased. The size of the heat exchanger may increase slightly compared to a heat exchanger carried out using the same number of tubes with a traditional triangle or square division or a reversed triangle or square division, depending on the tube division selected. However, an embodiment in accordance with the invention allows greater volume flows on the shell side than traditional solutions because vibration appearing on the heat exchanger's tube side at great speeds, in particular, is reduced efficiently.

### Figures

In the following, the invention will be described in more detail with the help of certain embodiments by referring to the enclosed drawings, where
- Figure 1 illustrates a cross-section of a tube and shell heat exchanger;
- Figures 2 a)-c) illustrate cross-sections of asymmetrical tube divisions;
- Figure 3 illustrates an electrical machine's cooling using a tube and shell heat exchanger.

### Detailed description

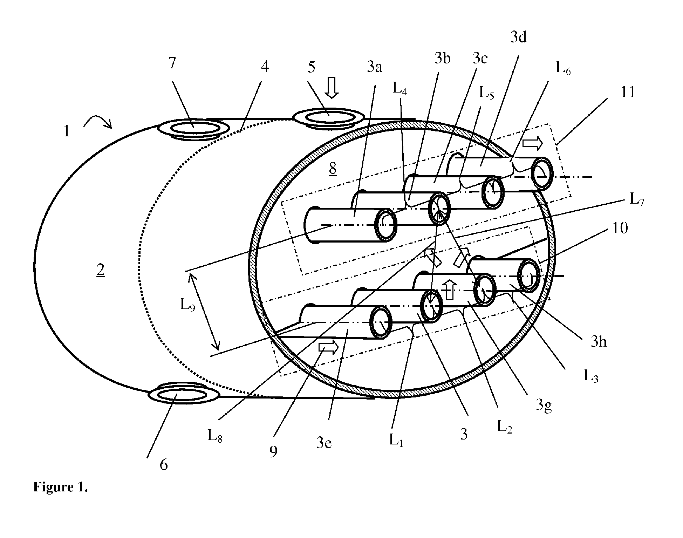

Figure 1 presents a cross-section of a tube and shell heat exchanger used for cooling electrical machines. The tube and shell heat exchanger 1 is formed of round tubes 3a-3g placed inside a cylindrical shell 2. With regard to the flow method, the heat exchanger is a cross-flow heat exchanger where flows are conducted perpendicularly on different sides of the tube transferring heat. The shell has a single draught structure and the medium flow on the shell side enters the heat exchanger through the unit 5 located at the first end and it flows through the heat exchanger to the other end where it is discharged. The medium flow on the tube side enters the heat exchanger through the unit 6 located at the first end, it flows inside the tubes 3e-3h in the first tube row 10 to the other end of the heat exchanger where it is turned in the turning chamber and flows inside the tubes 3a-3d in the second tube row 11 to the first end of the heat exchanger where it is discharged through the unit 7. The tubes 3a-3h are connected to the tube plate 4 at their ends which separates the medium flows on the tube and shell sides from each other. If the cooling agent circulation on the tube side is open, air is generally used as the cooling agent. Often, other gases and liquids are used in closed cooling agent circulation on the tube side. For simplicity, Figure 1 presents only two rows of tubes 10, 11. In practice, a tube and shell heat exchanger contains more than 1,000 tubes in multiple rows, and the number of tubes can be as high as 15,000.

Spacing plates 8 are attached inside the shell 2 to guide the flow on the shell side. The spacing plates 8 are alternately attached to the top or bottom sections inside the shell. They guide the medium flow 9 on the shell side to flow between the tube rows from the top of the shell to the bottom and back from the bottom of the shell to the top. In a cross-flow heat exchanger, the flow on the tube side and the flow on the shell side are essentially perpendicular to each other. The perpendicular position is achieved by setting the spacing plate 8 division to be dense. Figure 1 shows the spacing plate 8 which closes the top of the shell. It guides the shell side's medium flow 9, illustrated using wide arrows, and conducted to the top of the heat exchanger's 1 shell 2 to flow between two tube rows 10, 11 to the bottom of the heat exchanger. The next spacing plate (not presented in Figure 1) guides the medium flow 9 to flow between the tube rows from the top of the shell to the bottom.

The tube rows 10, 11 are overlapped asymmetrically. The distance L₁, L₂, L₃ of the tubes 3e-3h in the lower tube row 10 to each other is constant. The distance L₄, L₅, L₆ of the tubes 3a-3d in the upper tube row 11 to each other is constant. The distance L₉ between the lower 10 and upper 11 tube row is also constant throughout the length of the tube row. The distance between the tubes 3e-3h in the lower row and the tubes 3a-3d in the upper row is not constant because the tubes 3a-3d in the upper row are not placed horizontally in the middle of the gaps of the tubes 3e-3h in the lower row but slightly towards the other edge of the gap. If the distance L₁, L₂, L₃ between the tubes 3e-3h in the lower tube row 10 to each other is the same as the distance L₄, L₅, L₆ between the tubes 3a-3d in the upper tube row 11 to each other, two distances of different length L₇, L₈ are formed between the lower row tubes 3e-3h and the upper row tubes 3a-3d that alternate horizontally.

When the medium flow 9 on the shell side flows below the spacing plate 8 at the bottom of the shell 2, it turns to flow towards the top of the shell crosswise to the tube rows 10, 11. The medium flow 9 is divided into the gaps of the tubes 3e-3h in the lowest tube row 10. The speed of the medium flow between the tubes varies depending on the volume of the cooling agent flow required by the electrical machine.

Once the medium flow 9 has passed the first tube row 10, it partly combines and divides again to pass the second tube row 11. Because the distance between the tubes 3e-3h in the first row 10 and the tubes 3a-3d in the second row 11 changes, the flow cross-section available to the flow flowing between the tubes 3e-3h in the first tube row 10 changes. The flow cross-section is defined based on the distance L₇, L₈ between two tubes and the length of the tubes over a distance limited by the spacing plates 8. The flow conducted between the tubes 3e-3h in the first two rows is not divided evenly into two parts on both sides of the tubes 3a-3d in the second row because the available flow cross-sections are different sizes. This disturbs the medium flow 9 so that the medium flow 9 cannot synchronize when flowing past the tube rows and vibration caused by the air mass reduces in the tubes of the heat exchanger 1.

The synchronization of the medium flow 9 can be disturbed further by increasing the leakage medium flow flowing from the tube openings of the spacing plate 8.

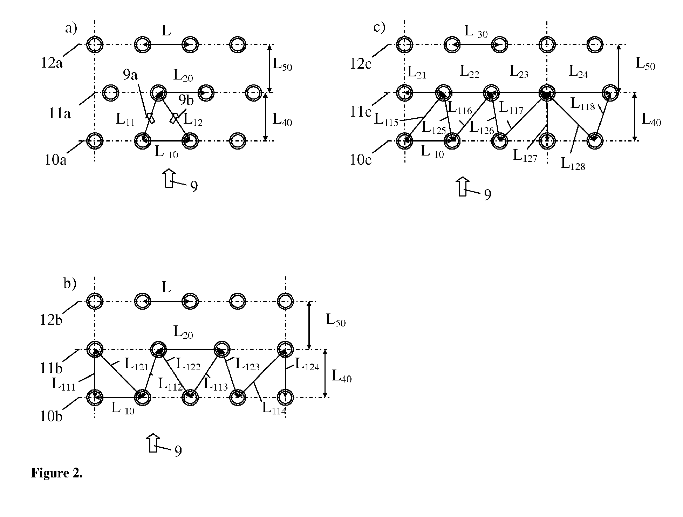

Figures 2 a)-c) presents cross-sections of asymmetrical tube divisions.

Figure 2 a) presents a tube division where the distance L₁₀, L₂₀, L₃₀ between the longitudinal central axes of two tubes in all three tube rows 10a, 11a, 12a is equal. The distance L₄₀, L₅₀ between the tube rows is constant. The second tube row 11 a is overlapped horizontally so that the distance L₁₀ between the longitudinal central axes of two parallel tubes in the first row 10a, the distance L₁₁ between the longitudinal central axes of the first parallel tube in the first row 10a and a tube in the second row 11a and the distance L₁₂ between the longitudinal central axes between the second parallel tube in the first row 10a and a tube in the second row 11a are different length. The distance L₁₁ between the longitudinal central axes of the first parallel tube in the first row 10a and a tube in the second row 11a is shorter than the distance L₁₂ between the longitudinal central axes of the second parallel tube in the first row 10a and a tube in the second row 11a. The distance L₁₀ between the longitudinal central axes of two parallel tubes in the first row 10a, the distance L₁₁ between the longitudinal central axes of the first parallel tube in the first row 10a and a tube in the second row 11a and the distance L12 between the longitudinal central axes between the second parallel tube in the first row 10a and a tube in the second row 11a form a triangle, all angles of which are acute.

The medium flow 9 flown into one free space left between two tubes in the first tube row is divided into several parts 9a, 9b as it flows towards the free space left between the tubes in the second tube row. The distances between the tubes in the first and second tube row 11a, 12a form flow cross-sections of different sizes, due to which the medium flow 9 divides into parts 9a, 9b unevenly.

The asymmetrical tube division in Figure 2 a) uses tube division where all of the tube rows are implemented using the same division, i.e. the length of the distances between the tubes are equal for all tube rows. The asymmetrical status can be achieved when the start of one tube row is drawn in or pushed out so that the distance L₁₁, L₁₂ of two parallel tubes in the previous tube row from the same tubes in in-drawn or out-pushed tube rows is unequal, after which the tubes in the in-drawn or out-pushed tube row are not vertically on top of each other with the tubes in the tube row which is below or above it, or the middle section of the tube divisions located below and above.

Figure 2 b) presents a tube division where the distance L₁₀, L₃₀ between the longitudinal central axes of two tubes in every second tube row 10b, 12b is equal. The distance L₂₀ between the longitudinal central axes of two tubes in the second tube row is constant and longer than that in the first 10b and third 12b tube row. The distance L₄₀, L₅₀ between the tube rows is constant.

The distance L₁₀ between the longitudinal central axes of two parallel tubes in the first row 10b is different from the distance L₁₁₁ -L₁₁₄ between the longitudinal central axes of the first parallel tube in the first row 10b and a tube in the second row 11b. The distance L₁₁₁ - L₁₁₄ between the longitudinal central axes of the first parallel tube in the first row 10b and a tube in the second row 11b is of a different length from the distance L₁₂₁-L₁₂₄ between the longitudinal central axes of the second parallel tube in the first row 10b and a tube in the second row 11b.

The distance L₁₀ between the longitudinal central axes of two parallel tubes in the first row 10b, the distance L₁₁₁ - L₁₁₄ between the longitudinal central axes of the first parallel tube in the first row 10b and a tube in the second row 11b and the distance L₁₂₁-L₁₂₄ between the longitudinal central axes between the second parallel tube in the first row 10b and a tube in the second row 11b form a triangle, no angle of which is obtuse, i.e. each angle of the triangle is smaller than or equal to 90°.

Figure 2 c) presents a tube division where the distance L₁₀, L₃₀ between the longitudinal central axes of two tubes in the first and third tube row 10c, 12c is equal. The distance L₂₁ - L₂₄ between the longitudinal central axes of two tubes in the second tube row 11c is not constant but the distance increases towards the edge of the tube row 11c. The distance L₄₀, L₅₀ between the tube rows is constant vertically.

The distance L₁₀ between the longitudinal central axes of two parallel tubes in the first row 10c is of a different length from the distance L₁₁₅- L₁₁₈ between the longitudinal central axes of the first parallel tube in the first row 10c and a tube in the second row 11c. The distance L₁₁₅ - L₁₁₈ between the longitudinal central axes of the first parallel tube in the first row 10c and a tube in the second row 11c is of a different length from the distance L₁₂₅ - L₁₂₈ between the longitudinal central axes of the second parallel tube in the first row 10c and a tube in the second row 11c.

The distance L₁₀ between the longitudinal central axes of two parallel tubes in the first row 10c, the distance L₁₁₅ - L₁₁₈ between the longitudinal central axes of the first parallel tube in the first row 10c and a tube in the second row 11c and the distance L₁₂₅ - L₁₂₈ between the longitudinal central axes between the second parallel tube in the first row 10c and a tube in the second row 11c form a triangle, each angle of which is smaller than or equal to 90°. The angle of the triangle is right when a tube in the first row 10c and a tube in the second row 11c are randomly on top of each other vertically.

The asymmetrical tube division can also be carried out so that the distance between the longitudinal central axes of two tubes in the second row is constant and shorter than the distance between the longitudinal central axes of two tubes in the first and third tube rows.

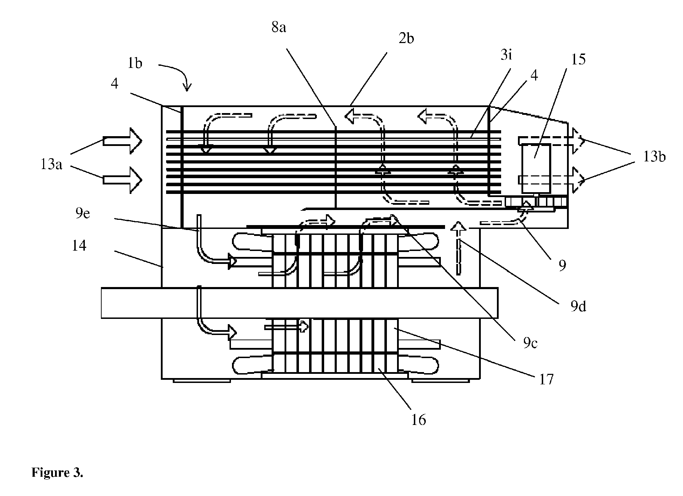

Figure 3 presents a cross-section of an electrical machine's cooling using a tube and shell heat exchanger. A tube and shell heat exchanger 1b is on top of an electrical machine 14. The electrical machine 14 is air-cooled. The tube and shell heat exchanger 1b consists of round tubes 3i placed inside a rectangular shell 2 with rounded corners. With regard to the flow method, the heat exchanger is a cross-flow heat exchanger where flows are conducted perpendicularly on different sides of the tube transferring heat. The medium flow 13a on the tube side is conducted into a tube bank formed by the tubes 3h from the left side of the heat exchanger 1b and it exits as a heated flow from the right end 13b of the machine. The medium flow 9 on the shell side is conducted to the right end of the heat exchanger 1b from the middle 9c and the right end 9d of the electrical machine. The tubes 3i are attached to tube plates 4 at their ends. The plates separate the medium flows on the tube and shell sides from each other.

A spacing plate 8a is attached inside the shell 2b to guide the flow on the shell side. The spacing plate 8a is solid, i.e. it is attached to all of the tubes 3i and the circulation of the medium flow on the shell side is carried out through the shell 2b. In this case, the spacing plate 8a guides the medium flow 9 on the shell side throughout the tube rows from the bottom of the shell to the top and back from the top of the shell to the bottom. Thus the flow on the tube side and the flow on the shell side are essentially perpendicular to each other.

When the medium flow 9 on the shell side flows below the tube plate 4 to the bottom of the shell 2b, it turns to flow towards the top of the shell crosswise to the tube rows. The medium flow 9 is divided into the gaps of the tubes 3i. Because the division of the tubes 3i is implemented asymmetrically in the heat exchanger 1b, there are several parallel flow paths available for the medium 9 flowing on the shell side and the synchronization of the flow is disturbed. As a result, the flow speed on the shell side, with which the tubing's fluid elastic instability launches or appears, increases.

The speed of the medium flow in the heat exchanger between the tubes varies depending on the volume of the cooling agent flow required by the electrical machine. Often, the blower circulating the cooling agent flow in electrical machines is placed on the rotor's axis, in which case it rotates at the same rotation speed as the rotor, i.e. in rotation speed controlled electrical machines the rotation speed follows fluctuations in the rotor's rotation speed. The blower may also be separate which is controlled based on the electrical machine's rotation speed or torque. A separate blower is necessary if nominal torque is required at low rotation speeds, in which case the blower attached to the machine's axis is not sufficient for producing a sufficiently strong forced flow. The configuration in Figure 3 includes a separate blower 15 improving the circulation of the medium. The normal range for the cooling agent flow of an electrical machine is 0-130% of the measured medium flow. The most common cooling agent in electrical machines is air or gas.

The cooling agent flow 9e of the electrical machine 14 cooled down in the heat exchanger 1b is conducted to the left end of the electrical machine 14, from where the cooling agent flow 9e flows through the stator 16 and the rotor 17 to the middle 9d of the machine and its other end 9c.

In Figure 3, the arrows drawn using a continuous line indicate cooler air, while the arrows drawn using a dashed line indicate hotter air.

The number of the tube rows that form asymmetry in the heat exchanger are selected according to the reduction of the required vibrations. A large reduction of vibrations can be achieved by increasing the asymmetry of the heat exchanger's tube division.

For simplicity, the figures present the heat exchanger tubes as tubes with a smooth outer surface. The heat exchanger tubes can also have a ribbed, flanged or threaded outer surface, or the cross-section of the outer surface may be star shaped. In this case, the length of the distances between the tubes is defined by the distances formed between the outer tube surfaces.

The invention has been described above with the help of certain embodiments. However, the description should not be considered as limiting the scope of patent protection; the embodiments of the invention may vary within the scope of the following claims.

Part list: 1, 1b heat exchanger; 2, 2b shell; 3a-i tube; 4 tube plate; 5 unit; 6 unit; 7 unit; 8, 8a spacing plate; 9, 9a-e medium flow on the shell side; 10, 10a-b, 11a-b, 12a-b tube row; 11 tube row; 13a, b medium flow on the tube side; 14 electrical machine; 15 blower; 16 stator; 17 rotor. L₁- L₁₀, L₂₀, L₃₀, L₄₀, L₅₀, L₁₁₁- L₁₁₈, L₁₂₁- L₁₂₈ distance.

## Claims

1. An arrangement in a heat exchanger where the heat exchanger (1) comprising a shell (2) and tubes (3a-3h) that are placed inside the shell (2), in which heat exchanger (1) the first medium (13a-b) is conductable into the tubes (3a-3h) and the second medium (9) between the inner surface of the shell (2) and the outer surface of the tubes (3a-h), and from which heat exchanger (1) the first medium is conductable out from the tubes (3a-3h) and the second medium (9) out from between the inner surface of the shell (2) and the outer surface of the tubes (3a-3h), **characterized in that** the heat exchanger (1) comprises at least two tube rows (10, 11) that are placed one after another in the direction of the flow of the second medium (9), and that the first tube row (10) comprises at least two tubes (3a-3h), the first distance (L₂) being between the two parallel tubes, the second distance (L₈) being between the first parallel tube in the first row (10) and a tube in the second row (11), and the third distance (L₇) being between the second parallel tube in the first row (10) and the tube in the second row (11), and that the first, second and third distances form a triangle, each angle of which is smaller than 90°, and that the second distance (L₈) is a different length from the third distance (L₇).

2. An arrangement according to Claim 1, **characterized in that** the first distance (L₂) is a different length from the second distance (L₈).

3. An arrangement according to Claim 1, **characterized in that** the distance (L₄) between the two parallel tubes in the second tube row (11) is at most twice the distance (L₂) between the two parallel tubes in the first tube row (10).

4. An arrangement according to Claim 1, **characterized in that** the second medium (9) that is conductable into the heat exchanger (1) is the cooling agent for the electrical machine (14).

5. An arrangement according to Claim 4, **characterized in that** the electrical machine (14) is control-operated and the rotation speed of the control-operated electrical machine is changeable, and that the volume flow of the cooling agent is changed when changing the rotation speed.

6. An arrangement according to Claim 1, **characterized in that** the first and second mediums (9) that is conductable into the heat exchanger (1) is gas.

7. An arrangement according to Claim 1, **characterized in that** the heat exchanger is a cross-flow heat exchanger, and that the flow direction (13a-b) of the first medium and the flow direction of the second medium (9) are essentially perpendicular.

8. A method for increasing a flow speed launching a fluid elastic instability of tubing in a heat exchanger, in which method the heat exchanger (1) comprises a shell (2) and tubes (3a-3h) that are placed inside the shell (2), in which heat exchanger (1) the first medium (13a-b) is conducted into the tubes (3a-3h) and the second medium (9) between the inner surface of the shell (2) and the outer surface of the tubes (3a-h), and from which heat exchanger (1) the first medium is conducted out from the tubes (3a-3h) and the second medium (9) out from between the inner surface of the shell (2) and the outer surface of the tubes (3a-3h), **characterized in that** at least part of the tube division is arranged asymmetrically.
